# EUROPÄISCHE PATENTSCHRIFT

(11) **EP 2 573 340 B1**
(45) Veröffentlichungstag und Bekanntmachung des Hinweises auf die Patenterteilung: **28.03.2018**
(21) Anmeldenummer: 12006364.9
(22) Anmeldetag: 10.09.2012
(51) Int. Cl.: F01N 3/035, F01N 3/20

(54) **Abgasanlage für eine Brennkraftmaschine**
Exhaust gas device for a combustion engine
Installation de gaz d'échappement pour moteur à combustion interne

(30) Priorität: 20.09.2011 DE 102011113809
(43) Veröffentlichungstag der Anmeldung: 27.03.2013
(73) Patentinhaber: Volkswagen Aktiengesellschaft, 38440 Wolfsburg (DE)
(72) Erfinder: Tzschentke, Matthias, 38527 Meine (DE)

(56) Entgegenhaltungen:
- EP-A1- 1 795 721
- EP-A1- 2 055 909
- EP-A1- 2 166 207
- EP-A2- 2 101 049
- WO-A2-2008/153873
- AT-A2- 507 633
- DE-A1-102006 049 392
- DE-A1-102008 032 332

## Beschreibung

Die Erfindung betrifft eine Abgasanlage für eine Brennkraftmaschine mit einem Dosierelement für ein Reduktionsmittel.

Die Abgase von Brennkraftmaschinen, die beispielsweise für den Antrieb von Kraftfahrzeugen eingesetzt werden, werden durch eine Abgasanlage geführt, bevor diese in die Atmosphäre ausgeblasen werden. In die Abgasanlage sind eine Vielzahl von Filtern und Katalysatoren integriert, die dazu dienen, als Schadstoffe deklarierte Anteile aus dem Abgas heraus zu filtern oder in unschädliche Bestandteile umzuwandeln.

Zur Eliminierung von im Abgas enthaltenen Stickoxiden (NOₓ) ist es bekannt, SCR-Katalysatoren zur selektiven katalytischen Reduktion (SCR: Selective Catalytic Reduction) einzusetzen, in denen die Stickoxide durch Einsatz ausgewählter Reduktionsmittel in Gegenwart von Sauerstoff reduziert werden. Dabei bedeutet selektiv, dass die Oxidation des Reduktionsmittels bevorzugt mit dem Sauerstoff der Stickoxide und nicht mit dem im Abgas enthaltenen molekularen Sauerstoff erfolgt.

Als Reduktionsmittel mit der höchsten Selektivität hat sich Ammoniak (NH₃) bewährt, das aufgrund seiner Toxizität nicht in reiner Form eingesetzt wird, sondern erst in einem SCR-Reaktor aus der ungiftigen Trägersubstanz Harnstoff ((NH₂)₂CO gewonnen wird. Der Harnstoff wird regelmäßig in einer wässrigen Lösung, der sogenannten Harnstoff-Wasser-Lösung (HWL) in einem separaten Tank in dem Kraftfahrzeug vorgehalten und stromaufwärts des SCR-Katalysators in die Abgasanlage eingespritzt.

Aus der DE 10 2006 003 786 A1 ist eine Abgasanlage eines Dieselmotors eines Kraftfahrzeugs bekannt, die eine Einspritzdüse für eine HWL aufweist. Zur Verbesserung der Vermischung der HWL mit dem gasförmigen Abgas ist ein Wirbelkörper stromaufwärts der Einspritzdüse für die HWL in die Abgasanlage integriert. Zudem ist vorgesehen, stromabwärts der Einspritzdüse das Abgasrohr der Abgasanlage durch eine Verzweigung in zwei Teilstränge zu unterteilen. Der mit der HWL vermischte Abgasstrom soll dann in einem definierten Teilungsverhältnis über die beiden Teilstränge geführt werden.

Die DE 10 2008 032 332 A1 offenbart eine Brennkraftmaschine, in deren Abgasstrang ein Dieselpartikelfilter (DPF) und, stromab davon, ein auf einer Harnstoff-Einspritzung beruhender SCR-Katalysator integriert sind. Um in einer Regenerationsphase für den DPF eine Überhitzung des SCR-Katalysators zu vermeiden, ist vorgesehen, eine vergleichsweise große Menge an Harnstoff einzuspritzen, wodurch der SCR-Katalysator gekühlt werden soll. Sofern diese Maßnahme nicht ausreichend ist, kann vorgesehen sein, das Abgas über einen Bypass an dem SCR-Katalysator vorbei zu führen.

Die DE 10 2006 049 392 A1 zeigt eine Abgasanlage einer Brennkraftmaschine mit einem ersten Abgaskrümmer und einem zweiten Abgaskrümmer. Im ersten Abgaskrümmer ist eine Reduktionsmittelzugabedüse angeordnet, und vom zweiten Abgaskrümmer zweigt eine Abgasrückführungsleitung ab. Das Abgas der zwei Abgaskrümmer strömt in einen Turbinenrotor, bevor es stromab der Turbine in einen NOx-Katalysator gelangt, mittels dem eine NOx-Reduktionsbehandlung erfolgt.

Das Dokument AT 507 633 A2 betrifft eine Abgasanlage mit einem Abgasnachbehandlungssystem zur Stickoxid- und Partikelreduzierung. Dabei wird zumindest ein SCR Katalysator stromab eines Partikelfilters vorgeschlagen. Stromauf des Partikelfilters ist eines Zumesseinrichtung für ein Reduktionsmittel beschrieben. Der Abgasstrang wird stromab der Zumesseinrichtung durch ein im Wesentlichen in Strömungsrichtung des Abgases ausgerichtetes Leitblech in einen ersten und einen zweiten Abgaspfad aufgeteilt. Das Leitblech ist dabei bevorzugt so angeordnet, dass es in dem Strahlbereich der Zumesseinrichtung liegt. Dadurch wird nur ein Teil des Abgases mit Reduktionmittel bemessen. Eine Trennung der Abgasströme erfolgt dabei ausschließlich an dem Leitblech. In dem dem SCR-Katalysator oder dem Partikelfilter tritt keine weitere Auftrennung in den ersten und den zweiten Abgaspfad mehr auf.

Es ist weiterhin bekannt, Brennkraftmaschinen mit einer Abgasrückführung zu versehen, um den einzelnen Zylindern der Brennkraftmaschine in bestimmten Lastbereichen rückgeführtes Abgas zuzuführen. Dadurch sollen die Spitzentemperaturen bei der Verbrennung gesenkt und als Folge die Stickoxidemissionen gesenkt werden. Bekannt sind sowohl eine Hochdruck-Abgasrückführung (HD-AGR), bei der der rückzuführende Teilstrom des Abgases noch vor einer Turbine eines Abgasturboladers dem Abgasstrom entnommen wird. Weiterhin ist eine Niederdruck-Abgasrückführung (ND-AGR) bekannt, bei der der rückzuführende Teilstrom hinter der Turbine und insbesondere auch hinter den Katalysatoren und Filtern der Abgasanlage entnommen wird.

Ein Problem bei der Einspritzung einer HWL zur Reduktion der Stickoxide im Abgas ist die Notwendigkeit, eine nicht unerhebliche Menge der HWL mitzuführen. Es ist somit notwendig, den für die HWL vorgesehenen Tank entweder regelmäßig aufzufüllen oder so groß zu dimensionieren, dass ein Auffüllen nur im Rahmen der regulären Wartungsintervalle eines mit einer solchen Brennkraftmaschine versehenen Kraftfahrzeugs notwendig ist. In jedem Fall sind mit dem Verbrauch an HWL und dem Auffüllen des HWL-Tanks nicht unerhebliche Kosten für den Betreiber des Kraftfahrzeugs verbunden. Ausgehend von diesen Stand der Technik lag der Erfindung die Aufgabe zugrunde, den Verbrauch an Reduktionsmittel einer mit einer gattungsgemäßen Abgasanlage versehenen Brennkraftmaschine zu reduzieren.

Diese Aufgabe wird durch den Gegenstand des unabhängigen Patentanspruchs 1 gelöst. Vorteilhafte Ausführungsformen der erfindungsgemäßen Abgasanlage sind Gegenstand der abhängigen Patentansprüche und ergeben sich aus der nachfolgenden Beschreibung der Erfindung.

Der Erfindung liegt die Erkenntnis zugrunde, dass der Verbrauch an Reduktionsmittel in einer gattungsgemäßen Abgasanlage unnötig hoch ist, wenn die Brennkraftmaschine mit einer Niederdruck-Abgasrückführung versehen ist, deren Abzweig hintern dem SCR-Katalysator der Abgasanlage positioniert ist. Über die Niederdruck-Abgasrückführung wird den Brennräumen der Brennkraftmaschine Abgas zugeführt, das bereits mittels des Reduktionsmittels weitgehend von Stickoxiden befreit wurde. Für diesen über die Niederdruck-Abgasrückführung geführten Teilstrom des Abgases ist die Reduktion der Stickoxide jedoch unnütz, da dieser ohnehin erneut der Verbrennung in den Brennräumen zugeführt und danach wieder über die Abgasanalage geführt wird. Einen wesentlichen Nutzen hat die Reduzierung der Stickoxide somit nur für das aus der Abgasanlage in die Atmosphäre entlassene Abgas.

Der Erfindung liegt daher der Gedanke zugrunde, nur denjenigen Teil des Abgases, der auch tatsächlich in die Atmosphäre entlassen wird, mit dem Reduktionsmittel zu versetzen, um die Stickoxide zu reduzieren.

Dies wird erfindungsgemäß dadurch gelöst, dass die erfindungsgemäße Abgasanlage, die gattungsgemäß zumindest ein Dosierelement für ein Reduktionsmittel aufweist, in zumindest einem Abschnitt in (mindestens) einen ersten und einen zweiten Teilstrang unterteilt ist, wobei über jeden der Teilstränge - nach Bedarf - zumindest ein Teil des Abgasstroms führbar ist, das Dosierelement so in den ersten Teilstrang integriert ist, dass der gegebenenfalls über den zweiten Teilstrang geführt Abgasteilstrom nicht mit Reduktionsmittel versetzt wird.

Dies ermöglicht, bei einer Abgasanlage, die erfindungsgemäß eine (Niederdruck-) Abgasrückführung umfasst, den Auslass für diese Abgasrückführung in den zweiten Teilstrang zu integrieren, wodurch einer mit der erfindungsgemäßen Abgasanlage verbundenen Brennkraftmaschine Abgas rückgeführt wird, das nicht unnötigerweise mit Reduktionsmittel vermischt wurde. Im Ergebnis kann dadurch der Verbrauch an Reduktionsmittel auf das tatsächlich benötigte Maß beschränkt werden.

Die erfindungsgemäße Unterteilung (des zumindest einen Abschnitts) der Abgasanlage in (zumindest) einen ersten und einen zweiten Teilstrang kann aber noch weitere Vorteile aufweisen, die zudem unabhängig von einer möglichen Einsparung an Reduktionsmittel durch die Integration eines Auslasses einer Abgasrückführung in denjenigen Teilstrang, in dem das Dosierelement für das Reduktionsmittel nicht angeordnet ist, sind.

Insbesondere besteht die Möglichkeit, Funktionselemente, die durch das in den Abgasstrom eingebrachte Reduktionsmittel negativ beeinflusst werden, gezielt in denjenigen Teilstrang der Abgasanlage zu integrieren, in dem der darin geführte Abgasteilstrom nicht mit dem Reduktionsmittel vermischt wird. Als Beispiel für ein solches Funktionselement kann insbesondere ein Temperatursensor angeführt werden, von denen bei gattungsgemäßen Abgasanlage regelmäßig mindestens zwei in demjenigen Abschnitt vorgesehen werden, in dem das Abgas bereits mit dem Reduktionsmittel versetzt wurde. Diese(r) Temperatursensor(en) können durch eine Benetzung mit dem vorzugsweise in flüssiger Form und insbesondere als HWL in die Abgasanlage eingebrachten Reduktionsmittel in ihrer Funktionsfähigkeit beeinflusst werden. Dies kann erfindungsgemäß somit sicher vermieden werden.

In der erfindungsgemäßen Abgasanlage weist diese einen (Diesel-)Partikelfilter auf, der dem Dosierelement nachgeschaltet ist. Über den Partikelfilter sollen Partikel aus dem Abgas herausgefiltert werden. Es ist vorgesehen, auch den Partikelfilter entsprechend der Unterteilung in der Abgasanlage in einen ersten und einen zweiten Teilstrang zu unterteilen und von Abgasteilströmen durchströmen zu lassen. Beispielsweise kann in jeden der beiden Teilstränge ein separater (d.h. baulich isolierter) Partikelfilter integriert sein. Ebenso ist es vorgesehen, dass der Partikelfilter selbst zwei Teilstränge ausbildet, die von den Abgasteilströmen durchströmt werden.

Die Trennung der Teilströme beim Durchströmen des Partikelfilter kann vorzugsweise dazu ausgenutzt werden, den Partikelfilter an die unterschiedlichen Teilströme des Abgases - einmal mit und einmal ohne zugesetztem Reduktionsmittel - anzupassen. Hierzu kann beispielsweise der Partikelfilter bzw. der Teil des Partikelfilters, der in den zweiten Teilstrang integriert ist, katalytisch beschichtet sein, um die Oxidation von (gegebenenfalls durch einen vorgeschalteten Oxidationskatalysator der Abgasanlage durchbrechende) Kohlenwasserstoffe (HC) und (gegebenenfalls bei einer Regeneration des Partikelfilters freiwerdendes) Kohlenmonoxid (CO) zu unterstützen. Eine solche katalytische Beschichtung ist in dem Partikelfilter des ersten Teilstrangs vorzugsweise nicht vorgesehen, da diese ein Aufbrechen des Reduktionsmittels (insbesondere bei Ammoniak) bewirken kann.

Eine Ausgestaltung der erfindungsgemäßen Abgasanlage, bei der in die zwei Teilstränge jeweils ein Partikelfilter(strang) integriert ist, wobei der Partikelfilter(strang) des zweiten Teilstrangs eine katalytische Beschichtung aufweist, ermöglicht einen vorteilhaften Betrieb insbesondere im Rahmen einer Regenerationsphase des Partikelfilters, d.h. wenn dieser temporär zusätzlich erhitzt wird (z.B. auf Temperaturen von mindestens 600°C), um von dem Partikelfilter zuvor herausgefilterte Partikel abzubrennen.

In dieser Regenerationsphase kann vorgesehen sein, zumindest einen Abgasteilstrom über den zweiten Teilstrang in die Atmosphäre abzuführen. Insbesondere in einer Aufheizphase während der Regenerationsphase kann dabei ein Großteil (vorzugsweise mindestens 70% des Abgasmassenstroms) bis nahezu das gesamte Abgas (100%) über den zweiten Teilstrang geführt werden. Dies kann vor dem Hintergrund erfolgen, dass ein Aufheizen des Partikelfilters für die Regenerationsphase regelmäßig durch innermotorische Maßnahmen einer mit der Abgasanlage verbundenen Brennkraftmaschine erfolgt, bei denen regelmäßig eine größere Menge an Kohlenwasserstoffen produziert werden, die gegebenenfalls nicht vollständig von einem vorgeschalteten Oxidationskatalysators oxidiert werden können. Diese "durchbrechenden" Kohlenwasserstoffe können dann in dem katalytisch beschichteten Partikelfilter des zweiten Teilstrangs oxidieren. Ein Entweichen der Kohlenwasserstoffe über den nicht katalytisch beschichteten Partikelfilter des ersten Teilstrang kann dadurch bei Bedarf vermieden werden.

Nach dem Abschluss der Aufheizphase im Rahmen der Regeneration des/der Partikelfilter, d.h. beim Erreichen einer Temperatur in dem/den Partikelfilter(n) von mindestens 450°C bis 500°C kann dann vorgesehen sein, den Abgasstrom vorzugsweise zu annähernd gleichen Teilen (vorzugsweise mit einer Toleranz von maximal ±10%) über die Partikelfilter der beiden Teilstränge zu führen, um deren vollständige Regeneration zu ermöglichen. Da der vorgeschaltete Oxidationskatalysator zu diesem Zeitpunkt ebenfalls eine erhöhte Temperatur mit einer entsprechend verbesserten Katalysatorleistung erreicht haben kann, sind dann keine relevanten Mengen durchbrechender Kohlenwasserstoffe mehr zu erwarten, so dass ein Führen eines Abgasteilstroms über den ersten Teilstrang der Abgasanlage mit dem nicht katalytisch beschichteten Partikelfilter unproblematisch ist.

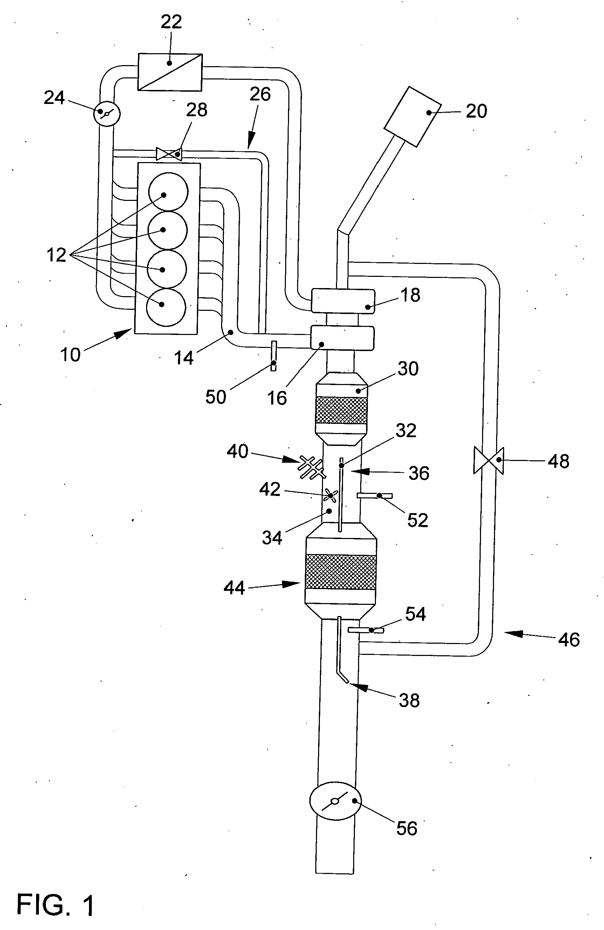

Um den Abgasstrom bedarfsgemäß auf die beiden Teilstränge aufzuteilen, weist die erfindungsgemäße Abgasanlage vorzugsweise eine entsprechende Regeleinrichtung auf; diese kann beispielsweise in Form einer einfachen Regelklappe ausgebildet sein, die beispielsweise bedarfsweise den Durchgang durch den ersten oder zweiten Teilstrang versperrt. Diese Regeleinrichtung kann dabei vorzugsweise in einen Abschnitt des zweiten Teilstrangs integriert sein, der stromabwärts des Auslasses für die Abgasrückführung angeordnet ist. Dadurch kann die Steuerung des Abgasstroms im Rahmen der Regeneration der Partikelfilter unabhängig von einer Rückführung eines Abgasteilstroms erfolgen.
Die Erfindung wird nachfolgend anhand eines in der Zeichnung dargestellten Ausführungsbeispiels näher erläutert. In der Zeichnung zeigt
Fig. 1: eine Brennkraftmaschine mit einer erfindungsgemäßen Abgasanlage, in der der Partikelfilter nur schematisch und ohne die zwei erfindungsgemäßen Teilstränge dargestellt ist.
Die Brennkraftmaschine umfasst einen Verbrennungsmotor 10, der mit insgesamt vier in Reihe angeordneten Arbeitszylindern versehen ist, in denen jeweils ein Kolben 12 zyklisch zwischen einem oberen und einem unteren Totpunkt bewegt wird. Über eine nicht dargestellte Einspritzanlage wird zu einem jeweils gegebenen Zeitpunkt Kraftstoff, vorwiegend DieselKraftstoff, in Brennräume, die von den einzelnen Arbeitszylindern ausgebildet werden, eingespritzt, wo sich dieser entzündet. Die daraus folgende Expansion der Verbrennungsgase bewirkt die Bewegung der Kolben 12 und dadurch eine Rotation einer mit den Kolben über Pleuel verbundenen Kurbelwelle (nicht dargestellt).
Nach der Verbrennung in den Arbeitszylindern wird das Verbrennungsgas als Abgas über einen Abgaskrümmer 14 der Abgasanlage zugeführt und zunächst über eine Turbine 16 eines Abgasturboladers geführt, in der dieses entspannt wird. Die dabei frei werdende Energie wird über eine Welle auf einen Verdichter 18 des Abgasturboladers übertragen, um die Frischluft, die den Arbeitszylindern des Verbrennungsmotors 10 einlassseitig zugeführt wird, zu verdichten. Dadurch kann eine höhere Füllung der Brennräume der Arbeitszylinder und im Ergebnis eine höhere Leistung der Brennkraftmaschine sowie gegebenenfalls ein geringerer spezifischer Verbrauch erreicht werden. Die Frischluft wird hierzu über einen Luftfilter 20 aus der Umgebung angesaugt, dann in dem Verdichter 18 des Abgasturboladers verdichtet, danach zur Kühlung mit dem Ziel einer Reduzierung des spezifischen Volumens über einen Ladeluftkühler 22 geführt und schließlich - gesteuert über eine Drosselklappe 24 - den Arbeitszylindern zugeführt.

Die Brennkraftmaschine umfasst weiterhin eine Hochdruck-Abgasrückführung 26. Diese dient dazu, den Brennräumen in bestimmten Betriebszuständen des Verbrennungsmotors teilweise nicht mehr brennbares Abgas zuzuführen, wodurch die Spitzentemperaturen bei der Verbrennung des verbliebenen Frischluft/Kraftstoff-Gemisches reduzieren werden können. Dadurch können die Stickoxidemissionen gering gehalten werden. Der Auslass für die über ein Ventil 28 gesteuerte Hochdruck-Abgasrückführung 26 ist stromaufwärts der Turbine 16 des Abgasturboladers vorgesehen.

Stromabwärts der Turbine 16 durchströmt das Abgas einen Oxidationskatalysator 30. Hinter dem Oxidationskatalysator 30 ist das Abgasrohr der Abgasanlage durch eine Trennwand 32 in einen ersten Teilstrang 34 und einen zweiten Teilstrang 36 unterteilt, auf die sich der Abgasstrom verteilt. Eine Verteilung des Abgasstroms ist dabei über eine Regelklappe 38, die an dem stromabwärts gelegenen Ende der Trennwand 32 angeordnet ist, steuerbar. Die Regelklappe 38 kann dabei sowohl den Durchfluss durch den ersten 34 als auch den zweiten Teilstrang 36 (auch teilweise) versperren.

In den ersten Teilstrang 34 ist ein Dosierventil 40 für ein Reduktionsmittel in das Abgasrohr integriert. Als Reduktionsmittel kommt Ammoniak zum Einsatz, das in bekannter Weise durch eine Hydrolysereaktion aus Harnstoff gebildet wird. Der Harnstoff wird dabei in Form einer Harnstoff-Wasser-Lösung (HWL) in einem nicht dargestellten Tank vorgehalten und über das Dosierventil 40 dosiert in den ersten Teilstrang 34 eingespritzt. Ein stromabwärts kurz hinter dem Dosierventil 40 angeordneter Mischer 42, der beispielsweise in Form von Leitblechen ausgebildet sein kann, sorgt für eine gute Durchmischung des in dem ersten Teilstrangs 34 geführten Abgasteilstroms mit der HWL.

Der mit dem Reduktionsmittel versetzte Abgasteilstrom wird dann über einen Abschnitt eines Partikelfilters 44 geführt, der eine Vielzahl von parallel angeordneten, in Längsrichtung des Partikelfilters weisenden Kanälen ausbildet, wobei eine Überströmung zwischen parallelen Kanälen über die Kanalwandung erfolgt. Dabei werden die Partikel aus dem Abgas herausgefiltert. Die gezielte Überströmung zwischen den Kanälen wird dabei über Verschlussstopfen in den sich gegenüber liegenden Enden paralleler Kanäle gesteuert. Auch der über den zweiten Teilstrang 36 geführt Abgasteilstrom wird über einen (anderen) Abschnitt des Partikelfilters 44 geführt und dort gefiltert. Die Trennung der über den ersten 34 und den zweiten Teilstrang 36 geführten Abgasteilströme wird in dem Partikelfilter aufrecht gehalten.

In dem sich an den Partikelfilter 44 anschließenden Abgasrohr wird die Trennung in den ersten und den zweiten Teilstrang noch über eine gewisse Distanz aufrecht gehalten. In diesem Abschnitt der Abgasanlage ist in den zweiten Teilstrang 36 ein Auslass für eine Niederdruck-Abgasrückführung 46 angeordnet, die - über ein Ventil 48 gesteuert - einen Teil des über den zweiten Teilstrang geführten Abgasteilstroms in die Ansaugstrecke (stromaufwärts des Verdichters 18) für die Frischluft rückführt.

In die Abgasanlage der dargestellten Brennkraftmaschine sind insgesamt drei Temperatursensoren integriert. Ein erster Temperatursensor 50 befindet sich in einem Abgasrohr, das den Abgaskrümmer 14 mit der Turbine 16 des Abgasturboladers verbindet. Ein zweiter Temperatursensor 52 ist stromaufwärts des Partikelfilters 44 in den zweiten Teilstrang 36 integriert. Der dritte Temperatursensor 54 befindet sich ebenfalls in dem zweiten Teilstrang 36, jedoch stromabwärts des Partikelfilters 44. Die Anordnung des zweiten 52 und dritten Temperatursensors 54 in dem zweiten Teilstrang 36 weist den Vorteil auf, dass deren Benetzung durch das über das Dosierventil 40 eingespritzte HWL ausgeschlossen werden kann, da sich die Vermischung der HWL auf den über den ersten Teilstrang 34 geführten Abgasteilstrom beschränkt.

Die Abgasanlage umfasst zudem noch eine Abgasgegendruckregelklappe 56, über die der Abgasgegendruck gesteuert werden kann, um bei Bedarf eine ausreichende Menge des Abgases über die Niederdruck-Abgasrückführung 46 zu führen.

### Bezugszeichenliste

- 10: Verbrennungsmotor
- 12: Kolben
- 14: Abgaskrümmer
- 16: Turbine
- 18: Verdichter
- 20: Luftfilter
- 22: Ladeluftkühler
- 24: Drosselklappe
- 26: Hochdruck-Abgasrückführung
- 28: Ventil
- 30: Oxidationskatalysator
- 32: Trennwand
- 34: erster Teilstrang
- 36: zweiter Teilstrang
- 38: Regelklappe
- 40: Dosierventil
- 42: Mischer
- 44: Partikelfilter
- 46: Niederdruck-Abgasrückführung
- 48: Ventil
- 50: Temperatursensor
- 52: Temperatursensor
- 54: Temperatursensor
- 56: Abgasgegendruckregelklappe

## Patentansprüche

1. Abgasanlage für eine Brennkraftmaschine, mit einem Dosierelement für ein Reduktionsmittel von Stickoxiden, wobei die Abgasanlage in zumindest einem Abschnitt einen ersten Teilstrang (34) und einen zweiten Teilstrang (36) umfasst, über die das Abgas führbar ist, wobei das Dosierelement in den ersten Teilstrang (34) integriert ist, und ein Auslass für eine Abgasrückführung in den zweiten Teilstrang (36) integriert ist, wobei der erste Teilstrang (34) und der zweite Teilstrang (36) stromabwärts einer Turbine (16) liegen und in den ersten (34) und den zweiten Teilstrang (36) ein Partikelfilter (44) integriert ist, **dadurch gekennzeichnet, dass** der Partikelfilter (44) selbst zwei Teilstränge zur Durchströmung von Abgasteilströmen ausbildet.

2. Abgasanlage nach Anspruch 1, **dadurch gekennzeichnet, dass** ein oder mehrere in den von dem ersten (34) und zweiten Teilstrang (36) gebildeten Abschnitt der Abgasanlage integrierte Temperatursensor(en) (52, 54) in dem zweiten Teilstrang (36) angeordnet sind.

3. Abgasanlage nach Anspruch 1 oder 2, **dadurch gekennzeichnet, dass** als Partikelfilter (44) in jedem der beiden Teilstränge (34, 36) ein baulich isolierter Partikelfilter integriert ist.

4. Abgasanlage nach einem der vorhergehenden Ansprüche, **dadurch gekennzeichnet, dass** der Partikelfilter (44) des zweiten Teilstrangs (36) eine katalytische Beschichtung aufweist.

5. Abgasanlage nach einem der vorhergehenden Ansprüche, **gekennzeichnet durch** eine Regeleinrichtung zur Steuerung der über den ersten (34) und zweiten Teilstrang (36) geführten Abgasströme.

6. Verfahren zum Betrieb einer Abgasanlage nach Anspruch 4 und 5, **dadurch gekennzeichnet, dass** in einer Regenerationsphase des Partikelfilters (44) zumindest ein Abgasteilstrom über den zweiten Teilstrang (36) in die Atmosphäre abgeführt wird.

7. Verfahren nach Anspruch 6, **dadurch gekennzeichnet, dass** in einer Aufheizphase der Regenerationsphase mindestens 70%, vorzugsweise mindestens 90% des Abgases über den zweiten Teilstrang (36) geführt wird.

8. Verfahren nach Anspruch 6 oder 7, **dadurch gekennzeichnet, dass** nach dem Erreichen einer Temperatur in dem Partikelfilter (44) von mindestens ca. 450°C, vorzugsweise von mindestens ca. 500°C, der Abgasstrom annähernd hälftig über den ersten (34) und den zweiten Teilstrang (36) geführt wird.

## Claims

1. Exhaust system for an internal combustion engine, having a metering element for a reducing agent from nitrogen oxides, wherein the exhaust gas system comprises, in at least one section, a first partial train (34) and a second partial train (36) via which the exhaust gas can be conducted, wherein the metering element is integrated into the first partial train (34), and an outlet for exhaust gas recirculation is integrated into the second partial train (36), wherein the first partial train (34) and the second partial train (36) are located downstream of a turbine (16), and a particle filter (44) is integrated into the first partial train (34) and the second partial train (36), **characterized in that** the particle filter (44) itself forms two partial trains for partial streams of exhaust gas to flow through.

2. Exhaust system according to Claim 1, **characterized in that** one or more temperature sensors (52, 54) which are integrated into the section of the exhaust system which is formed by the first partial train (34) and the second partial train (36) are arranged in the second partial train (36).

3. Exhaust system according to Claim 1 or 2, **characterized in that** a structurally isolated particle filter is integrated as a particle filter (44) into each of the two partial trains (34, 36).

4. Exhaust system according to one of the preceding claims, **characterized in that** the particle filter (44) of the second partial train (36) has a catalytic coating.

5. Exhaust system according to one of the preceding claims, **characterized by** a control device for controlling the streams of exhaust gas conducted via the first partial train (34) and second partial train (36).

6. Method for operating an exhaust system according to Claims 4 and 5, **characterized in that** in a regeneration phase of the particle filter (44) at least one partial stream of exhaust gas is discharged into the atmosphere via the second partial train (36).

7. Method according to Claim 6, **characterized in that** in a heating phase of the regeneration phase at least 70%, preferably at least 90%, of the exhaust gas is conducted via the second partial train (36).

8. Method according to Claims 6 or 7, **characterized in that** after a temperature of at least approximately 450°C, preferably of at least approximately 500°C, is reached in the particle filter (44), approximately half of the stream of exhaust gas is conducted via the first partial train (34) and the second partial train (36).

## Revendications

1. Installation de gaz d'échappement pour un moteur à combustion interne, avec un élément de dosage pour un agent réducteur d'oxydes d'azote, dans laquelle l'installation de gaz d'échappement comprend dans au moins une partie une première section partielle (34) et une deuxième section partielle (36), par lesquelles les gaz d'échappement peuvent être conduits, dans laquelle l'élément de dosage est intégré dans la première section partielle (34), et une sortie pour un recyclage de gaz d'échappement est intégrée dans la deuxième section partielle (36), dans laquelle la première section partielle (34) et la deuxième section partielle (36) sont situées en aval d'une turbine (16) et un filtre à particules (44) est intégré dans la première (34) et dans la deuxième (36) section partielle, **caractérisée en ce que** le filtre à particules (44) forme lui-même deux sections partielles pour le passage de courants partiels de gaz d'échappement.

2. Installation de gaz d'échappement selon la revendication 1, **caractérisée en ce qu'**un ou plusieurs capteur(s) de température (52, 54) intégrés dans la partie de l'installation de gaz d'échappement formée par la première (34) et la deuxième (36) section partielle sont disposés dans la deuxième section partielle (36).

3. Installation de gaz d'échappement selon la revendication 1 ou 2, **caractérisée en ce qu'**un filtre à particules isolé par construction est intégré comme filtre à particules (44) dans chacune des deux sections partielles (34, 36).

4. Installation de gaz d'échappement selon l'une quelconque des revendications précédentes, **caractérisée en ce que** le filtre à particules (44) de la deuxième section partielle (36) présente un revêtement catalytique.

5. Installation de gaz d'échappement selon l'une quelconque des revendications précédentes, **caractérisée par** un dispositif de régulation pour la commande des courants de gaz d'échappement conduits par la première (34) et la deuxième (36) section partielle.

6. Procédé de fonctionnement d'une installation de gaz d'échappement selon la revendication 4 ou 5, **caractérisé en ce que** dans une phase de régénération du filtre à particules (44), on évacue au moins un courant partiel de gaz d'échappement dans l'atmosphère par la deuxième section partielle (36).

7. Procédé selon la revendication 6, **caractérisé en ce que** dans une phase de chauffage de la phase de régénération, on conduit au moins 70 %, de préférence au moins 90 % des gaz d'échappement par la deuxième section partielle (36).

8. Procédé selon la revendication 6 ou 7, **caractérisé en ce qu'**après avoir atteint dans le filtre à particules (44) une température d'au moins environ 450°C, de préférence d'au moins environ 500°C, on conduit le courant de gaz d'échappement environ par moitié par la première (34) et la deuxième (36) section partielle.
